# FASCICULE DE BREVET EUROPEEN

(11) **EP 1 409 558 B1**
(45) Date de publication et mention de la délivrance du brevet: **13.09.2006**
(21) Numéro de dépôt: 02787154.0
(22) Date de dépôt: 15.07.2002
(51) Int. Cl.: C08F 4/40

(54) **PROCEDE DE POLYMERISATION DE MONOMERES VINYLIQUES ET/OU D'OLIGOMERES COMPORTANT AU MOINS UN RADICAL VINYLIQUE**
VERFAHREN ZUR POLYMERISATION VON VINYLMONOMEREN UND/ODER -OLIGOMEREN MIT MINDESTENS EINEM VINYLREST
METHOD FOR POLYMERISING VINYL MONOMERS AND/OR OLIGOMERS COMPRISING AT LEAST A VINYL RADICAL

(30) Priorité: 17.07.2001 FR 0109636
(43) Date de publication de la demande: 21.04.2004
(73) Titulaire: GTI PROCESS, 95 540 Mery sur Oise (FR)
(72) Inventeur: LAPAIRY, Jean-Claude, 60000 Beauvais (FR)
(74) Mandataire: de Saint-Palais, Arnaud Marie
(86) Numéro de dépôt international: PCT/FR2002/002517
(87) Numéro de publication internationale: WO 2003/008463

(56) Documents cités:
- DE-A- 4 401 387

## Description

La présente invention a pour objet un procédé de polymérisation de monomères vinyliques et/ou d'oligomères comportant au moins un radical vinylique. Elle concerne également le catalyseur pour la mise en oeuvre de ce procédé ainsi que les produits spécifiquement obtenus par ledit procédé, à savoir notamment, mais non exclusivement, les produits appartenant aux familles suivantes :
- produits non chargés : vernis translucides, résines translucides pouvant éventuellement servir à l'imprégnation de fibres, "gel coats" translucides,
- produits pigmentés : peintures, résines opaques, "gel coats" opaques,
- produits incorporant des charges appropriées aux résultats recherchés, notamment :
   - résistance au feu : produits ignifugés incluant des matières ignifugeantes telles que le Tri hydrate d'alumine, le mica standard ou expansible, le tri ou pentoxyde d'antimoine, ...
   - dureté : produits incluant des matières dures telles que le corindon, le carbure de silicium, le diamant synthétique, ...
   - transparence : produits transparents ou translucides incluant du quartz, de la silice pure, ...
   - coût : produits dont la charge est constituée par des matières bon marché telles que des carbonates, de la silice, etc... (par exemple pour la réalisation de revêtements de sol),
   - aptitude au moulage.

Il est rappelé pour tout ce qui suit que le terme vinylique couvre en particulier les termes acrylique et méthacrylique.

D'une façon générale, on sait qu'il existe dans le commerce de nombreux types de peintures ou de vernis tels que, par exemple, des peintures glycérophtaliques, acryliques ou vinyliques. Néanmoins, on constate que mis à part les peintures à l'eau acryliques ou vinyliques qui présentent une mauvaise tenue chimique, il n'existe pas de peintures acryliques ou vinyliques réticulables par polymérisation. Ceci est principalement dû au fait que l'oxygène de l'air ambiant inhibe le processus de polymérisation.

Il existe des solutions utilisant des photos initiateurs permettant de faire polymériser ce type de peintures aux UV. Ces produits sont très chers. Les installations sont lourdes, onéreuses et nécessitent une protection complexe du personnel. La forme et la taille des pièces à peindre sont limitées ainsi que l'épaisseur du feuil de peinture dès qu'il y a des pigments ou charges opacifiants.

Or, dans de _nombreuses applications, l'usage de peintures ou de vernis acryliques réticulés est souhaitable en raison de leurs propriétés avantageuses.

En ce qui concerne les résines moulables telles que, par exemple, les résines phénoliques, polyesters, époxydes, acryliques, polyuréthanes, le MODAR® de la société Ashland (oligomère à double liaison en solution dans du méthacrylate de méthyle qui réagit avec un catalyseur pour polymériser), ces résines présentent les mêmes inconvénients que ceux précédemment évoqués : A l'intérieur des moules, il demeure toujours au niveau des surfaces de moulage des bulles d'air engendrant localement une mauvaise polymérisation.

En outre, la polymérisation des pièces massives par rayonnement UV ne convient pas en raison de l'épaisseur des pièces, étant entendu que les rayons UV sont fortement atténués en surface et ne pénètrent pas à coeur des pièces.

Un autre inconvénient de la plupart de ces résines consiste en ce qu'en dessous de 100°C la polymérisation exige l'emploi d'un catalyseur très puissant, habituellement à base de peroxyde de benzoyle (habituellement en poudre) et d'un accélérateur aminé extrêmement toxique qui engendre une coloration du produit fini. Cette coloration évolutive rend difficile, voire même impossible, l'obtention d'une couleur souhaitée, en particulier une couleur claire ou blanche pour une peinture ou un "gel coat".

Pour résoudre le problème de l'inhibition du catalyseur par l'oxygène lors de la polymérisation, on a proposé d'incorporer au mélange monomère/catalyseur, de la paraffine de manière à créer à la surface du mélange un écran étanche à l'oxygène. Cette solution qui permet d'obtenir une bonne polymérisation en surface de la résine présente néanmoins l'inconvénient d'obtenir des pièces dont la surface est mate, non brillante, qu'il est nécessaire de repolir. D'autre part, la paraffine située en surface nuit à l'accrochage ultérieur de tout produit comme une colle ou une résine de stratification.

Il a été également proposé un procédé (résine "Santolink"® de la Société MONSANTO) consistant à effectuer une transformation d'un monomère particulier en hydroperoxyde pour effectuer la polymérisation des monomères. Toutefois, cette solution n'a pas eu le succès escompté du fait d'une part de sa faible réactivité et d'autre part en raison du dégagement d'acroléine lors de la réaction de polymérisation, produit bien connu pour sa forte toxicité.

Le brevet DE 44 01 387 décrit quant à lui un procédé de polymérisation à chaud de monomères acryliques en émulsion qui utilise des aldéhydes comme catalyseurs. L'inconvénient de cette solution tient au fait :
- qu'elle utilise une émulsion à chaud,
- qu'elle ne fait pas intervenir d'accélérateur,
- qu'elle présente une grande sensibilité au dioxygène. En présence de dioxygène (par exemple de l'air) l'aldéhyde s'oxyde en formant un acide.

L'invention part de la constatation que l'on sait réaliser des monomères vinyliques et des oligomèrés comportant des radicaux vinyliques qui présentent des propriétés particulièrement recherchées (absence d'odeur, point de vapeur élevé écartant le risque d'inflammation et de déflagration, absence de toxicité, possibilité de travail dans des conditions atmosphériques normales).

Or, jusqu'ici, ces monomères ou ces oligomères n'étaient pas exploités dans les applications précédemment évoquées, faute de savoir les polymériser dans des conditions satisfaisantes : La polymérisation radicalaire qui met en oeuvre un peroxyde et éventuellement un accélérateur tel que par exemple des amines ne fonctionne pas bien : Les radicaux qui réagissent avec les doubles liaisons C = C afin d'initier leur polymérisation et d'amorcer ainsi la croissance de la chaîne de polymères, n'ont pas une énergie d'activation suffisante. D'autre part, certains types de composés conduisent à une réaction de polymérisation convenable mais à un produit final entaché de défauts tels que notamment le jaunissement ou une toxicité inadmissible.

On sait en outre que les radicaux formés lors d'une réaction de polymérisation sont très sensibles au dioxygène provenant principalement de l'air ambiant. En effet, le dioxygène réagit avec les centres actifs radicalaires, provenant des peroxydes et/ou des chaînes de polymères en formation, et inhibe donc la polymérisation des vinyliques ou acryliques.

Le peroxyde de méthyle éthyle cétone PMEC que l'on utilise fréquemment, notamment pour la polymérisation du styrène, ne possède pas une énergie d'activation suffisante pour initier la polymérisation des monomères acryliques ou vinyliques. De plus, l'une des réactions de décomposition de ce peroxyde fournit du dioxygène qui, s'ajoutant au dioxygène de l'air, contribue à inhiber la réaction de polymérisation, y compris au coeur du polymère ; le dioxygène atmosphérique inhibant la polymérisation acrylique ou vinylique plus particulièrement en surface.

L'invention a donc plus particulièrement pour but de supprimer ces inconvénients de manière à pouvoir exploiter les avantages des monomères et des oligomères vinyliques tout en surmontant les problèmes résultant de leur polymérisation.

A cet effet, elle propose un procédé de polymérisation consistant à mélanger le monomère vinylique ou l'oligomère possédant au moins un radical vinylique avec :
- au moins un agent fournissant du dioxygène,
- au moins un aldéhyde représentant, par exemple entre 0,1 % et 15% de la masse du mélange,
- au moins un accélérateur.

Une particularité du procédé selon l'invention est d'utiliser le dioxygène dans le processus de polymérisation, contrairement au préjugé de l'homme de l'art qui le considérait jusqu'ici comme un poison de la réaction de polymérisation. Cette utilisation présente l'avantage de s'affranchir du problème résultant de la présence de dioxygène dans l'environnement immédiat de la réaction (par exemple au niveau des surfaces des moules).

Un deuxième avantage de ce procédé réside dans une cinétique de la polymérisation qui permet un allongement d'une phase où le polymère présente la texture d'un gel.

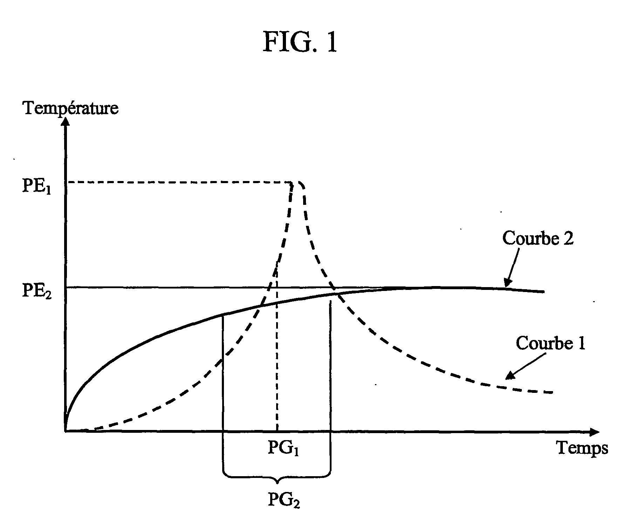

On sait que, dans les procédés classiques, les polymérisations utilisant par exemple une amine et du peroxyde de benzoyle ont un pic exothermique, PE₁, élevé comme le montre la courbe 1 de la figure 1 indiquant la température de réaction en fonction du temps et une très brève période de phase gel, PG₁.
Ce type de réaction présente un pic exothermique très élevé dépassant le point d'ébullition des monomères, ce qui présente le risque de formation de bulles dans la masse du polymère. De plus ces variations brutales de températures provoquent des tensions internes.
De surcroît, dans ce cas, le polymère ne possède la texture d'un gel que sur une très brève période.
Le procédé selon l'invention permet d'étaler le pic exothermique, PE₂, comme le montre la courbe 2 de la figure 1, évitant ainsi les bulles d'air et les contraintes.
En jouant sur les aldéhydes, il permet également d'allonger la durée de la phase de gel PG₂, ce qui permet par exemple d'ébarber les pièces pendant qu'elles sont malléables.

L'aldéhyde utilisé conformément au procédé selon l'invention répond à la formule générale ci-après : 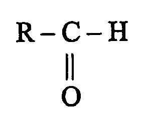 formule dans laquelle le radical R est un composé comprenant au moins un atome de carbone.

L'invention utilise ici le processus connu qui consiste en ce que plus le radical R est donneur d'électrons, plus la formation d'un groupe hydroperoxyde in situ est favorisée, puis la présence d'un accélérateur crée des radicaux provoquant l'amorçage de la polymérisation..

A titre d'exemple, l'aldéhyde utilisé pourra consister en l'un des aldéhydes énumérés ci-après ou en une combinaison d'au moins deux de ces aldéhydes :
- aldéhyde hydratropique (bonne réactivité)
- aldéhyde phénylacétique (réactivité moyenne)
- aldéhyde 3,7-diméthyl-2,6-octadienal (plus d'efficacité avec l'air selon les monomères utilisés)
- 3-méthoxy-4-hydroxy benzaldéhyde
- 3,4-diméthoxy benzaldéhyde
- hydroxy-2-benzaldéhyde
- aldéhyde hydratropique
- 4-hydroxy-3,5-diméthoxy benzaldéhyde (aldéhyde syringa)
- decenal-4-trans
- aldéhyde alpha hexylcinnamique
- aldéhyde undécylique (aldéhyde C11).

L'agent fournissant du dioxygène pourra comprendre au moins un des catalyseurs énumérés dans la liste ci-après :
- eau oxygénée H₂O₂
- un hydroperoxyde (R - O - O - H : esters acides de l'eau oxygénée)
- PMEC (peroxyde de méthyle éthyle cétone)
- PAA (peroxyde d'acétyle acétone)
- peroxyde de cyclohexanone
- peroxybenzoate de tert-butyle
- tert-butyl peroxy isopropyl carbonate
- 2,5-bis(2-éthylhexanoyl-peroxy)-2,5-diméthylhexane
- peroxy-2-éthylhexanoate de tert-butyle
- peroxy-3,5,5-triméthylhexanoate de tert-butyle
- 1,1-bis(tert-butylperoxy)-3,3,5-triméthylcyclohexane
- peroxyde de dicumyle
- peroxydicarbonate de bis (4-tert-butylcyclohexyle)
- peroxyde de cétone
- perester.

Comme précédemment mentionné, l'accélérateur utilisé pourra consister en tout produit pouvant décomposer un peroxyde. Il pourra comprendre par exemple un ou plusieurs des composés suivants :
- un sel métallique tel qu'un sel de vanadium, un sel de cobalt,
- un sel de potassium,
- une amine.

Cet accélérateur pourra représenter par exemple de 0,1 % à 1,0 % de la masse du mélange.

En fait, le processus de polymérisation conforme au procédé selon l'invention est un processus en quatre étapes, à savoir :
- Une première étape au cours de laquelle l'accélérateur réagit avec l'agent de génération d'oxygène pour produire du dioxygène O₂.
- Une deuxième étape d'oxydation de l'aldéhyde grâce à l'oxygène dégagé par l'agent générateur d'oxygène et à l'oxygène éventuellement dissout ou présent en surface selon le schéma suivant : 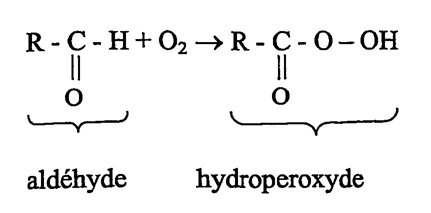 sans la présence d'accélérateurs (sels métalliques ou autres), cet hydroperoxyde ne serait pas décomposé en radicaux mais subirait un deuxième étage d'oxydation donnant un acide.
- Une troisième étape dans laquelle l'hydroperoxyde obtenu à l'issue de la phase d'oxydation réagit avec le reste d'accélérateur pour produire un cation RCO₂^{•} selon le schéma suivant : 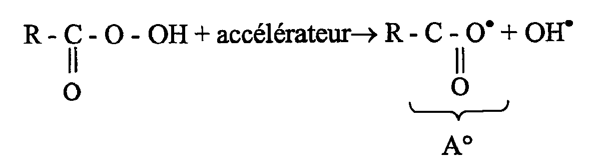
   Le cation RCO₂^{•} désigné par la lettre A° ci-après possède une énergie d'activation suffisante pour initier la polymérisation du monomère vinylique ou de l'oligomère.
- Une quatrième étape de polymérisation du monomère vinylique (ou de l'oligomère) selon le schéma suivant :

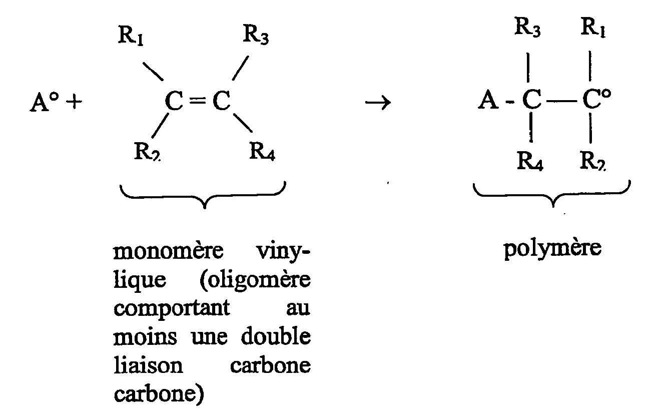

Avantageusement, tous les composants utilisés dans la mise en oeuvre du procédé selon l'invention pourront se présenter en phase liquide.

Ces produits pourront être présentés à la vente sous forme bi-composants, l'un de ces composants comprenant un agent générateur d'oxygène, un aldéhyde et un inhibiteur éventuel, tandis que l'autre pourra comprendre le monomère (ou l'oligomère) et un accélérateur.

Des exemples de mise en oeuvre du procédé selon l'invention seront décrits ci-après.

### Exemple N° 1 Vernis

Aliphatique uréthane triacrylate 32%
Hexanediol triacrylate 23%
Promoteur d'adhésion triacrylate acide 7%
Accélérateur octoate de cobalt à 6% type NL51P de AKZO 0,3%

Peroxyde de méthyle éthyle cétone à 50 % type Butanox LPT de AKZO 1%
Aldéhyde 3,7-diméthyl-2,6-octadienal 5%
Aldéhyde hydratropique 3,7%

Une fois les produits mélangés, on peut appliquer le produit ainsi obtenu au pinceau ou au pistolet. On obtiendra une polymérisation avec un film billant et non poisseux en surface.

### Exemple 2 : Vernis sur métal

Acrylate uréthane aliphatique 17%
Hexanediol diacrylate 40%
Epoxyacrylate tétrafonctionnel 17%
Triméthylolpropane triacrylate étoxylé 20%
Accélérateur Octoate de cobalt à 6% type NL51P de la société AKZO 0,3%

Peroxyde de méthyle éthyle cétone à 50 % type Butanox LPT de AKZO 1%
Aldéhyde 3,7-diméthyl-2,6-octadienal 2,5%
Aldéhyde phénacétique 2,2 %

Une fois les produits mélangés, on peut appliquer le produit ainsi obtenu au pinceau ou au pistolet sur un support métallique. On obtiendra une polymérisation avec un film billant et non poisseux en surface, accrochant particulièrement bien sur le métal.

### Exemple 3 "gel coat" blanc résistant chimiquement

Méthacrylate de bisphénol A 54%
Triméthylolpropane triméthacrylate 14%
Acrylate d'isodécyl 20%
Dioxyde de titane 5%
Agent tixotropant silice type aérosol 200 de Degussa 0,3%
Accélérateur octoate de cobalt à 6% type NL51P de AKZO 0,3%

Peroxyde de méthyle éthyle cétone à 50 % type Butanox LPT de AKZO 1%
Aldéhyde 3,7-diméthyl-2,6-octadienal 3%
Aldéhyde hydratropique 1%

Une fois les produits mélangés, on peut appliquer le produit ainsi obtenu au pinceau ou au pistolet sur un moule. On obtiendra une polymérisation avec un film billant et non poisseux en surface. On pourra après appliquer un composite résine et fibre de renforcement qui accrochera parfaitement sur ce "gel coat". Après polymérisation de ce composite, on obtiendra un "gel coat" de surface de très bel aspect, résistant chimiquement et en particulier antigraffiti.

### Exemple N° 4 Béton de résine

Butanediol diméthacrylate 3%
Méthyle méthacrylate 14,4%
Polyméthylméthacrylate en poudre 2%
Sable de fontainebleau 75%
Agent tixotropant silice type aérosol 200 de Degussa 0,3%
Accélérateur octoate de cobalt à 6% type NL51P de AKZO 0,3%

Peroxyde de méthyle éthyle cétone à 50 % type Butanox LPT de AKZO 1%
Aldéhyde 3,7-diméthyl-2,6-octadienal 3%
Aldéhyde hydratropique 1%

On obtient ainsi une fois les produits mélangés un béton de résine que l'on peut couler dans un moule ou étaler sur un sol industriel. On obtiendra après polymérisation un produit non poisseux en surface et de très bel aspect.

Dans ces quatre exemples, les trois derniers produits PMEC, aldéhyde 3,7-diméthyl-2,6-octadienal et aldéhyde hydratropique ou phénacétique peuvent être pré-mélangés avec un inhibiteur type TBC tertiobutylcatécol (entre 0,01 et 1%) pour former un durcisseur stable qui sera à mélanger aux formulations précédemment indiquées.

## Revendications

1. Procédé de polymérisation de monomères vinyliques et/ou d'oligomères comportant au moins un radical vinylique,
**caractérisée en ce qu'**il consiste à mélanger le monomère vinylique ou l'oligomère possédant au moins un radical vinylique avec :
- au moins un agent fournissant du dioxygène,
- au moins un aldéhyde,
- au moins un accélérateur.

2. Procédé selon la revendication 1,
**caractérisé en ce que** le susdit aldéhyde représente entre 0,1% et 15% de la masse du mélange.

3. Procédé selon la revendication 1,
**caractérisé en ce que** le susdit aldéhyde répond à la formule générale ci-après : 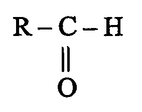 formule dans laquelle le radical R est un composé comprenant au moins un atome de carbone.

4. Procédé selon l'une des revendications 1, 2 et 3,
**caractérisé en ce que** le susdit aldéhyde consiste en l'un des aldéhydes énumérés ci-après ou en une combinaison d'au moins deux de ces aldéhydes :
• aldéhyde hydratropique
• aldéhyde phénylacétique
• aldéhyde 3,7-diméthyl-2,6-octadienal
• 3-méthoxy-4-hydroxy benzaldéhyde
• 3,4-diméthoxy benzaldéhyde
• hydroxy-2-benzaldéhyde
• aldéhyde hydratropique
• 4-hydroxy-3,5-diméthoxy benzaldéhyde (aldéhyde syringa)
• decenal-4-trans
• aldéhyde alpha hexylcinnamique
• aldéhyde undécylique (aldéhyde C11).

5. Procédé selon l'une des revendications précédentes,
**caractérisé en ce que** l'agent fournissant du dioxygène consiste en l'un des catalyseurs énumérés dans la liste ci-après :
• eau oxygénée H₂O₂
• PMEC (peroxyde de méthyle éthyle cétone)
• PAA (peroxyde d'acétyle acétone)
• peroxyde de cyclohexanone
• peroxybenzoate de tert-butyle
• tert-butyl peroxy isopropyl carbonate
• 2,5-bis(2-éthylhexanoyl-peroxy)-2,5-diméthylhexane
• peroxy-2-éthylhexanoate de tert-butyle
• peroxy-3,5,5-triméthylhexanoate de tert-butyle
• 1,1-bis(tert-butylperoxy)-3,3,5-triméthylcyclohexane
• peroxyde de dicumyle
• peroxydicarbonate de bis (4-tert-butylcyclohexyle)
• peroxyde de cétone
• perester.

6. Procédé selon l'une des revendications précédentes,
**caractérisé en ce que** le susdit accélérateur consiste en tout produit pouvant décomposer un peroxyde.

7. Procédé selon l'une des revendications précédentes,
**caractérisé en ce que** le susdit accélérateur comprend un ou plusieurs des composés suivants :
• un sel métallique tel qu'un sel de vanadium, un sel de cobalt,
• un sel de potassium,
• une amine.

8. Procédé selon l'une des revendications précédentes,
**caractérisé en ce que** le susdit accélérateur représente de 0,1 % à 1 % de la masse du mélange.

9. Procédé selon l'une des revendications précédentes, **caractérisé en ce qu'**il comprend quatre étapes, à savoir :
- Une première étape au cours de laquelle l'accélérateur réagit avec l'agent de génération d'oxygène pour produire du dioxygène O₂.
- Une deuxième étape d'oxydation de l'aldéhyde grâce à l'oxygène dégagé par l'agent générateur d'oxygène et à l'oxygène éventuellement dissout ou présent en surface selon le schéma suivant : 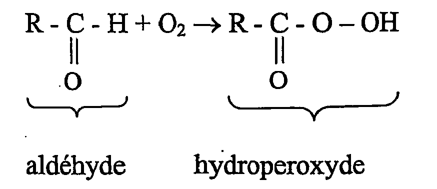
- Une troisième étape dans laquelle l'hydroperoxyde obtenu à l'issue de la phase d'oxydation réagit avec le reste d'accélérateur pour produire un cation RCO₂⁺ selon le schéma suivant : 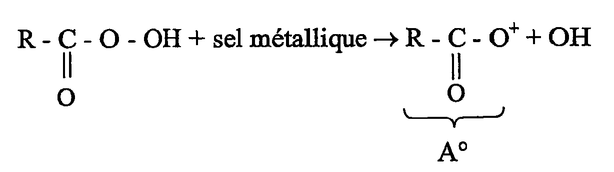
- Une quatrième étape de polymérisation du monomère vinylique (ou de l'oligomère) selon le schéma suivant :

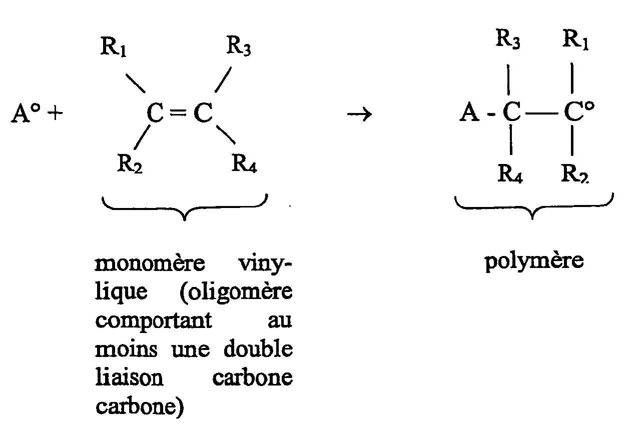

10. Procédé selon l'une des revendications précédentes,
**caractérisé en ce que** tous les composants utilisés se présentent en phase liquide.

11. Procédé selon l'une des revendications précédentes,
**caractérisé en ce que** les produits qu'il met en oeuvre se présentent sous une forme bi-composants.

12. Procédé selon la revendication 10,
**caractérisé en ce que** l'un des composants comprend un agent générateur d'oxygène, un aldéhyde et un inhibiteur éventuel tandis que l'autre comprend le monomère et/ou l'oligomère et un accélérateur.

## Claims

1. Method for polymerising vinyl monomers and/or oligomers comprising at least one vinyl radical, **characterized in that** it consists of mixing the vinyl monomer or oligomer having at least one vinyl radical with:
- at least one dioxygen-supplying agent
- at least one aldehyde
- at least one accelerator.

2. Method as in claim 1, **characterized in that** said aldehyde represents between 0.1% and 15% of the weight of the mixture.

3. Method as in claim 1, **characterized in that** said aldehyde meets the following general formula: 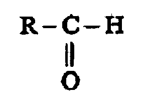 a formula in which the radical R is a compound comprising at least one carbon atom.

4. Method as in any of claims 1, 2 and 3, **characterized in that** the said aldehyde consists of one of the aldehydes listed below or a combination of at least two of these aldehydes:
• hydratropic aldehyde
• phenylacetic aldehyde
• 3,7-dimethyl-2,6-octadienal aldehyde
• 3-methoxy-4-hydroxy benzaldehyde
• 3,4-dimethoxy benzaldehyde
• hydroxy-2-benzaldehyde
• hydratropic aldehyde
• 4-hydroxy-3,5-dimethoxy benzaldehyde (syringa aldehyde)
• decenal-4-trans
• alpha-hexylcinnamic aldehyde
• undecylic aldehyde (aldehyde C11).

5. Method as in any of the preceding claims, **characterized in that** the agent supplying dioxygen consists of one of the catalysts listed below:
• hydrogen peroxide H₂O₂
• MEKP (Methyl Ethyl Ketone Peroxide)
• AAP (Acetyl Acetone Peroxide)
• Cyclohexanone peroxide
• Tert-butyl peroxybenzoate
• Tert-butyl peroxy isopropyl carbonate
• 2,5-bis(2-ethylhexanoyl-peroxy)-2,5-dimethylhexane
• Tert-butyl peroxy-2-ethylhexanoate
• Tert-butyl peroxy-3,5,5-trimethylhexanoate
• 1,1-bis(tert-butylperoxy)-3,3,5-trimethylcyclohexane
• Dicumyl peroxide
• Bis(4-tert-butylcyclohexyl) peroxydicarbonate
• Ketone peroxide
• Perester.

6. Method as in any of the preceding claims, **characterized in that** said accelerator consists of any product able to decompose a peroxide.

7. Method as in any of the preceding claims, **characterized in that** said accelerator comprises one or more of the following compounds:
• a metal salt such as a vanadium salt, a cobalt salt
• a potassium salt
• an amine

8. Method as in any of the preceding claims, **characterized in that** said accelerator represents 0.1 % to 1 % of the weight of the mixture.

9. Method as in any of the preceding claims, **characterized in that** it comprises four steps, namely:
- a first step during which the accelerator reacts with the oxygen-generating agent to produce dioxygen O₂.
- a second step to oxidize the aldehyde by means of the oxygen released by the oxygen-generating agent and the oxygen possibly dissolved or present on the surface in accordance with the following schematic: 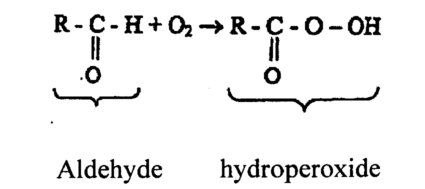
- a third step during which the hydroperoxide obtained after the oxidation phase reacts with the remainder of the accelerator to produce a cation RCO₂⁺ in accordance with the following schematic: 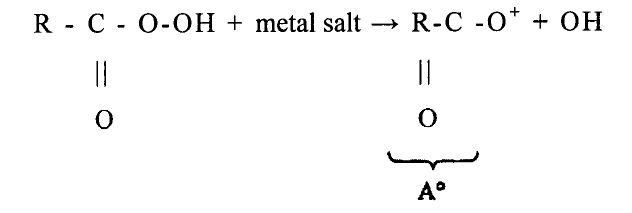
- a fourth step for polymerising the vinyl monomer (or oligomer) according to the following schematic: 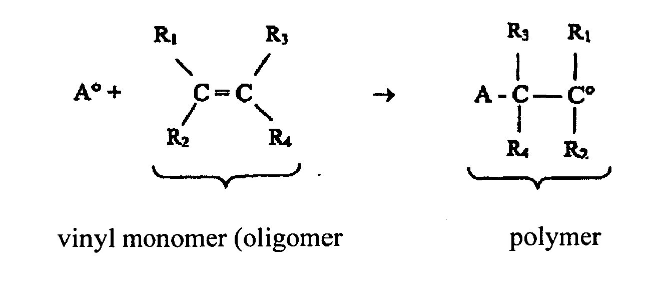 containing at least one double
carbon carbon bond).

10. Method as in any of the preceding claims, **characterized in that** all the components used are in liquid phase.

11. Method as in any of the preceding claims, **characterized in that** the products it uses are in bi-component form.

12. Method as in claim 10, **characterized in that** one of the components comprises an oxygen-generating agent, an aldehyde and optionally an inhibitor, whilst the other comprises the monomer and/or oligomer and an accelerator.

## Patentansprüche

1. Verfahren zur Polymerisation von Vinyl-Monomeren und/oder von Oligomeren mit mindestens einem Vinylradikal, **gekennzeichnet dadurch, dass** dieses darin besteht, die Vinyl-Monomere oder das mindestens eine ein Vinylradikal aufweisende Oligomer zu vermischen, mit:
- mindestens einem, den Disauerstoff liefernden Wirkstoff,
- mindestens einem Aldehyd,
- mindestens einem Beschleuniger.

2. Verfahren nach Anspruch 1, **gekennzeichnet dadurch, dass** besagter Aldehyd zwischen 01% und 15% der Masse der Mischung darstellt.

3. Verfahren nach Anspruch 1, **gekennzeichnet dadurch, dass** besagter Aldehyd auf folgende allgemeine Formel reagiert: 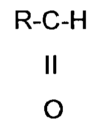 In dieser Formel ist das R-Radikal eine mindestens ein Kohlenstoffatom enthaltende Verbindung.

4. Verfahren nach einem der Ansprüche 1,2 und 3, **gekennzeichnet dadurch, dass** besagter Aldehyd aus einem der nachfolgenden Aldehyde oder aus einer Kombination von mindestens zwei von diesen Aldehyden besteht:
• Hydratropaldehyd
• Phenylacetaldehyd
• Aldehyd 3,7-dimethyl-2,6-octadienal
• 3-methoxy-4-hydroxy Benzaldehyd
• 3,4-Dimethoxy-Benzaldehyd
• Hydroxy-2-Benzaldehyd
• Hydratropaldehyd
• 4-hydroxy-3,5-dimethoxy Benzaldehyd (Syringaaldehyd)
• Decenal-4-trans
• Alpha-Hexylcinnamicaldehyd
• Undecylaldehyd (Aldehyd C11).

5. Verfahren nach einem der vorangehenden Ansprüche, **gekennzeichnet dadurch, dass** der den Disauerstoff liefernde Wirkstoff aus einem der folgenden aufgeführten Katalysatoren besteht:
• Wasserstoffperoxid H₂O₂
• MEKP (Methylethylketonperoxid)
• AAP (Acetylacetonperoxid)
• Cyclohexanonperoxid
• tert-Butylperoxybenzoat
• tert-Butylperoxyisopropylcarbonat
• 2,5-bis (2-ethylhexanoyl-peroxy)2,5-dimethylhexan
• tert-Butylperoxy-2-ethylhexanoat
• tert-Butylperoxy-3,5,5-trimethylhexanoat
• 1,1-bis(tert-butylperoxy)3,3,5-trimethylcyclohexan
• Dicumylperoxid
• Bis (4-tert-butylcyclohexyl)peroxydicarbonat)
• Ketonperoxid
• Perester

6. Verfahren nach einem der vorangehenden Ansprüche, **gekennzeichnet dadurch, dass** besagter Beschleuniger aus jeglichem Produkt besteht, der ein Peroxid zersetzen kann.

7. Verfahren nach einem der vorangehenden Ansprüche, **gekennzeichnet dadurch, dass** besagter Beschleuniger eine oder mehrere der folgenden Verbindungen umfasst:
. ein Metallsalz, wie z. B. ein Vanadiumsalz, ein Kobaltsalz,
. ein Kaliumsalz,
. ein Amin.

8. Verfahren nach einem der vorangehenden Ansprüche, **gekennzeichnet dadurch, dass** besagter Beschleuniger 0,1 % bis 1% der Masse der Mischung darstellt.

9. Verfahren nach einem der vorangehenden Ansprüche, **gekennzeichnet dadurch, dass** es vier Etappen umfasst, das heißt:
- Eine erste Etappe, im Verlauf derer der Beschleuniger auf den den Sauerstoff erzeugenden Wirkstoff reagiert, um den Disauerstoff O₂ herzustellen.
- Eine zweite Oxydationsetappe des Aldehyds, aufgrund des durch den sauerstofferzeugenden Wirkstoff ausgeschiedenen Sauerstoffs und dem eventuell auflösten oder auf der Oberfläche vorhandenen Sauerstoff, gemäß folgendem Schema: 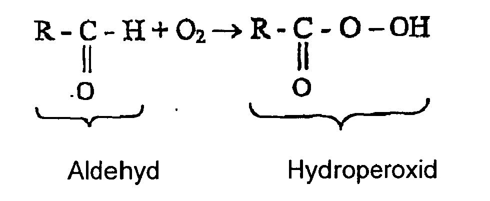
- Eine dritte Etappe, in welcher der am Ausgang der Oxydationsphase erhaltene Hydroperoxid auf den Beschleunigerrest reagiert, um gemäß folgendem Schema ein Kation RCO₂⁺ herzustellen: 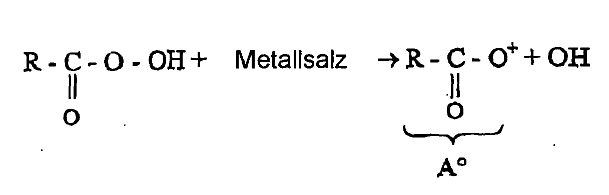
- Eine vierte Polymerisationsetappe des Vinylmonomers (oder des Oligomers) gemäß folgendem Schema:

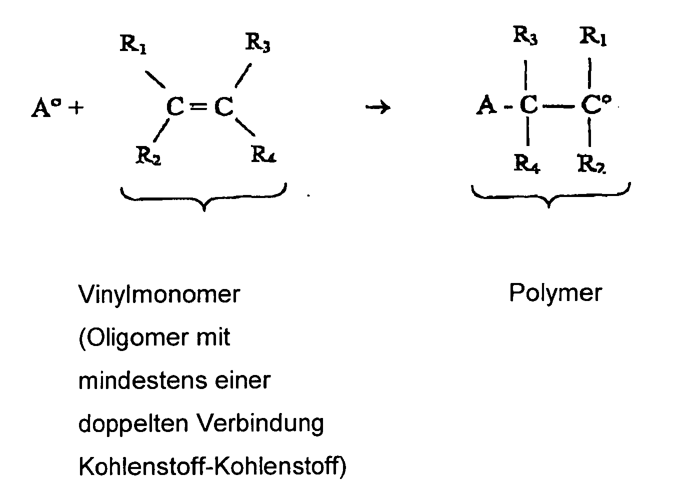

10. Verfahren nach einem der vorangehenden Ansprüche, **gekennzeichnet dadurch, dass** alle benutzten Bestandteile in flüssiger Phase vorliegen.

11. Verfahren nach einem der vorangehenden Ansprüche, **gekennzeichnet dadurch, dass** die hierbei verwendeten Produkte in Form von Bi-Bestandteilen vorliegen.

12. Verfahren nach Anspruch 10, **gekennzeichnet dadurch, dass** einer der Bestandteile einen sauerstofferzeugenden Wirkstoff, einen Aldehyd und einen eventuellen Hemmstoff umfasst, während der andere den Monomer und/oder Oligomer und einen Beschleuniger umfasst.
